# FASCICULE DE BREVET EUROPEEN

(11) **EP 1 665 846 B1**
(45) Date de publication et mention de la délivrance du brevet: **09.05.2007**
(21) Numéro de dépôt: 04742288.6
(22) Date de dépôt: 19.03.2004
(51) Int. Cl.: H04Q 7/32

(54) **SYSTEME DE COMMUNICATION TELEPHONIQUE PERMETTANT DIFFERENTS MODES D'OPERATION CRYPTES OU EN CLAIR**
FERNSPRECHKOMMUNIKATIONSSYSTEM FÜR VERSCHIEDENE VERSCHLÜSSELTE ODER UNVERSCHLÜSSELTE BETRIEBSARTEN
TELEPHONE COMMUNICATION SYSTEM ALLOWING DIFFERENT OPERATION MODES WITH OR WITHOUT ENCRYPTION

(30) Priorité: 24.03.2003 FR 0303803
(43) Date de publication de la demande: 07.06.2006
(73) Titulaire: SAGEM Défense Sécurité, 75015 Paris (FR)
(72) Inventeur: LEMASSON, Eric, F-27590 PITRES (FR)
(74) Mandataire: Debay, Yves
(86) Numéro de dépôt international: PCT/FR2004/000672
(87) Numéro de publication internationale: WO 2004/086663

(56) Documents cités:
- EP-A- 0 891 112
- EP-A- 0 957 651
- DE-A- 10 140 544

## Description

### DOMAINE TECHNIQUE DE L'INVENTION

La présente invention concerne un système de communication téléphonique offrant à son utilisateur la possibilité de choisir plusieurs modes de communication avec son correspondant. On entend par ici une communication en clair ou chiffrée de la voix ou de données.

La présente invention vise notamment à autoriser de telles communications dans toutes zones géographiques couvertes ou non par un réseau de radiophonie cellulaire.

### ARRIERE-PLAN TECHNOLOGIQUE DE L'INVENTION

Il est connu dans l'art antérieur des téléphones fixes ou mobiles qui utilisent une communication cryptée afin de protéger des conversations de bout en bout du réseau. Ces téléphones nécessitent un appareil ou une extension qui permet de réaliser ce chiffrage. Il est nécessaire que les deux interlocuteurs d'une conversation chiffrée aient en possession un outil de chiffrage déchiffrage des données.

Plus particulièrement, les téléphones mobiles ont besoin d'une technologie discrète et facile d'utilisation. Il est connu par le brevet EP 0 818 937 A1, un équipement de communication radio téléphonique qui permet de crypter une conversation et utilise le canal de transmission de données. Cet équipement comprend un téléphone mobile de type GSM comportant un microphone et un écouteur. Ce téléphone est raccordé, par une connexion filaire, à une unité d'extension qui réalise le chiffrage de la conversation. L'unité d'extension a un aspect extérieur semblable à celui d'un terminal de radio communication et comporte au moins un vocodeur et un module de chiffrement. Dans un mode de communication sécurisé, le vocodeur forme à partir du signal issu du microphone un flux binaire que le module de chiffrement traite pour produire des données envoyées à une interface de données, vers le terminal, pour transmission sur un canal de données. En réception, des données présentées à l'interface de données après réception sur un canal de données sont déchiffrées par le module de chiffrement pour produire un flux binaire que le vocodeur décode pour commander l'écouteur. Ce brevet exploite ainsi la présence de canaux de données dans certains réseaux de radiotéléphonie.

Il est connu par le brevet FR 2 809 920 un téléphone mobile comportant un terminal de communication radio téléphonique dont le capot anti-poussière est modifié. Ce capot comprend un lecteur de support à microcircuit permettant d'insérer une carte à puce pouvant servir au cryptage des données. Dans le cas où les données devraient être sécurisées, un programme de cryptage est prévu dans une mémoire programme de la carte à puce ou dans la mémoire programme du boîtier principal.

Les conversations ou communications cryptées à partir ou vers un téléphone mobile sont transmises par le biais du réseau de radiotéléphonie mobile.

Une autre utilisation du téléphone portable de type GSM est la transmission de données par la connexion d'un modem d'un ordinateur portable avec un téléphone mobile. Ainsi l'ordinateur pilote le téléphone mobile à travers son modem et peut transmettre vers l'extérieur ou recevoir des données de l'ordinateur par le réseau de radio communication. Un tel dispositif est connu de la demande de brevet GB230343.

Il est connu par le document DE 101 40 544 un système de communication de type téléphone mobile, comprenant une batterie amovible, dans laquelle est intégré un module de sécurité contenant une unité de chiffrement/déchiffrement de données ou de la voix. Ce système comprend en outre une interface externe de liaison avec différents réseaux de communication par satellite, interface par laquelle une communication cryptée est possible. Lorsque les données (ou de la voix) cryptées sont reçues par le module d'émission/réception d'un tel système de communication, celles-ci sont dirigées vers le haut-parleur par exemple. L'émission de voix cryptée est réalisée à travers un câble de liaison au réseau de communication choisi.

Il est également connu, par le document EP 0 957 651, un téléphone mobile comportant un logement pour une carte à puce de chiffrement/déchiffrement, ledit logement étant situé sous la batterie.

Cependant, lorsque l'utilisateur d'un téléphone mobile voyage dans un pays ou une région ne possédant pas de réseau de radiotéléphonie cellulaire, il ne peut utiliser son téléphone mobile soit à titre de modem, soit comme moyen de communication même si un réseau de téléphonie commuté existe ou d'autres moyens de communication sont disponibles. Il n'existe pas à ce jour de possibilité de transmission de données chiffrées via le réseau de radiotéléphonie GSM.

### DESCRIPTION GENERALE DE L'INVENTION

La présente invention a donc pour objet de pallier des inconvénients de l'art antérieur en proposant un téléphone mobile pilotant un modem externe pour transmettre une conversation cryptée à travers le réseau RTC (Réseau de Téléphonie Commuté) ou via une valise type Immarsat qui redirige les données vers un satellite. C'est le mode MODEM. La présente invention permet aussi la transmission de données cryptées lorsque le téléphone mobile est configuré en tant que transmetteur modem.

Ce but est atteint par un système de communication téléphonique comprenant un module de radiocommunication et un module de chiffrement / déchiffrement des données, caractérisé en ce que
- le module de radiocommunication comprend un module d'interface modem relié au module de radiocommunication et pilotant un modem externe ;
- le module de chiffrement / déchiffrement comprend un lecteur de support à micro circuit, un circuit de chiffrement / déchiffrement et un circuit vocodeur recevant des données voix à chiffrer ou à déchiffrer du module de radiocommunication, le chiffrement / déchiffrement des données étant effectué directement dans le circuit de chiffrement / déchiffrement du module de chiffrement déchiffrement.

Selon une autre particularité, le module de radiocommunication comprend un premier aiguillage des données voix cryptées vers l'interface modem ou vers un circuit de modulation / démodulation, constitué par un moyen de commutation commandé par logiciel.

Selon une autre particularité, le module de radiocommunication comprend un second aiguillage des données du modem vers le module de chiffrement / déchiffrement ou vers un circuit de modulation / démodulation, constitué par un moyen de commutation commandé par logiciel.

Selon une autre particularité, le module de radiocommunication comprend au moins une commande du menu affiché, sur un moyen d'affichage du terminal, permettant de choisir le mode de conversation et de transmission.

Selon une autre particularité, le module de chiffrement / déchiffrement est inséré dans un boîtier capot relié au module terminal par un contacteur.

Selon une autre particularité, le module de chiffrement / déchiffrement comporte un lecteur de support de données pour l'échange uniquement de clés de session de chiffrement de l'utilisateur.

Selon une autre particularité, le module de radiocommunication comporte une connexion série vers un modem externe.

Selon une autre particularité, le système de communication téléphonique est caractérisé en ce que la connexion série est filaire de type RS232.

Selon une autre particularité, la connexion série est non filaire.

Selon une autre particularité, la connexion série non filaire est Infrarouge.

Selon une autre particularité, la connexion série non filaire est radio 802.11 (WIFI).

Selon une autre particularité, la connexion série non filaire est bluetooth.

Selon une autre particularité, le mode de conversation sélectionné par le menu est une communication téléphonique en clair à travers le réseau de radiotéléphonie cellulaire, mettant en liaison directement un DSP en émission ou en réception avec un circuit de modulation démodulation radio du module de radiocommunication.

Selon une autre particularité, le mode de conversation sélectionné par le menu est une communication téléphonique cryptée à travers le réseau de radiotéléphonie cellulaire, ce mode intercalant par la commutation du premier aiguillage entre un DSP et un circuit de modulation / démodulation radio du module de radiocommunication le module de chiffrement / déchiffrement.

Selon une autre particularité, le mode de conversation sélectionné par le menu est une communication téléphonique cryptée à travers le réseau de téléphonie commuté ou un satellite via un modem externe commandé par le module de radiocommunication, ce mode intercalant, par la commutation du premier aiguillage, entre le DSP et le module de chiffrement / déchiffrement, un circuit vocodeur adaptant les signaux numériques du DSP à la vitesse de transmission d'un modem avant de les envoyer au circuit de chiffrement / déchiffrement et déroutant les signaux provenant du modem externe en sortant du circuit de chiffrement déchiffrement vers un haut-parleur et ceux provenant d'un microphone et sortant du circuit de chiffrement / déchiffrement vers le modem externe.

Selon une autre particularité, le mode de transmission des données sélectionné par le menu est une transmission téléphonique en clair à travers le réseau de radiotéléphonie cellulaire mettant en liaison, par la commutation du second aiguillage, le module d'interface modem avec un circuit de modulation démodulation radio.

Selon une autre particularité, le mode de transmission des données sélectionné par le menu est une transmission téléphonique cryptée à travers le réseau de radiotéléphonie cellulaire intercalant, par la commutation du second aiguillage, entre le module d'interface modem et le circuit de modulation / démodulation radio, le module de chiffrement / déchiffrement.

### BREVE DESCRIPTION DES DESSINS

D'autres particularités et avantages de la présente invention apparaîtront plus clairement à la lecture de la description ci-après, faite en référence aux dessins annexés, dans lesquels :
- la figure 1 représente un équipement de communication selon l'invention ;
- la figure 2 représente le diagramme synoptique d'un boîtier principal de communication et d'un module de chiffrement selon l'invention ;
- la figure 3A représente le diagramme synoptique du trajet de la voix lors d'une communication en clair ;
- la figure 3B représente le diagramme synoptique du trajet des données lors d'une communication en clair ;
- la figure 4A représente le diagramme synoptique du trajet de l'émission et de la réception de la voix lors d'une communication cryptée fonctionnant sur tous les réseaux GSM ;
- la figure 4B représente le diagramme synoptique du transfert de données lors d'une communication cryptée fonctionnant sur tous les réseaux GSM;
- les figures 5A et 5B représentent respectivement le diagramme synoptique du trajet de l'émission et de la réception de la parole lors d'une communication cryptée sur tous les réseaux filaires et/ou satellite (mode MODEM) ;
- la figure 6 représente le diagramme synoptique d'une carte SIM.

### DESCRIPTION DES MODES DE REALISATION PREFERES DE L'INVENTION

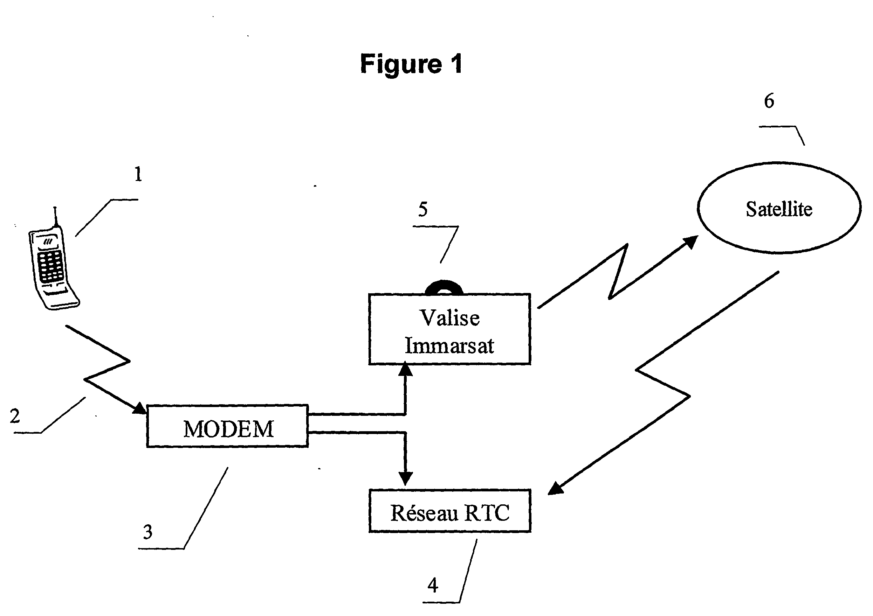

La figure 1 représente un téléphone mobile (1) relié à un modem externe (3) via une connexion série (2) par exemple filaire ou non filaire notamment de type radio 802.11 ou bluetooth ou infrarouge. Le modem (3) est relié au réseau de téléphonie commuté (RTC) (4) ou à une valise type Immarsat (5) qui communique par ondes radio avec un satellite (6), ce dernier retransmet les informations vers le réseau RTC (4). Avec le téléphone (1) selon l'invention, si l'utilisateur est dans une zone non couverte par le réseau de radiotéléphonie cellulaire, il peut utiliser l'invention pour communiquer par l'interface modem du téléphone de manière cryptée ou non avec une tierce personne via, par exemple le réseau téléphonique commuté.

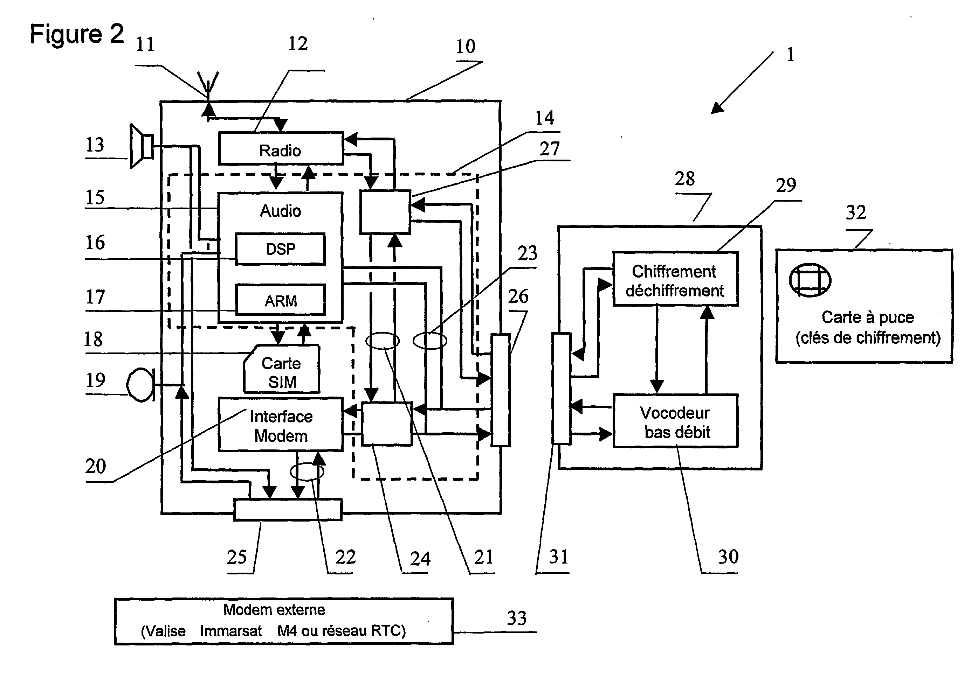

La figure 2 montre un téléphone mobile (1) comprenant un boîtier de radiocommunication principal (10) et un module de chiffrement (28).

Le téléphone mobile comporte un circuit en bande de base (14) qui comprend :
- un module audio (15) comportant deux microprocesseurs. Un microprocesseur de traitement de signaux numériques type DSP (16), il permet la fonction vocodeur et adapte le débit des données au réseau GSM (13 000 bauds). Ce microprocesseur DSP (16) effectue un traitement des données et permet de mettre en forme des trames AMRT (accès multiple par répartition dans le temps). Le module audio comprend un microprocesseur de type ARM (17) équivalent à un processeur RISC (Reduced Instruction Set Computer) qui permet d'accroître les performances du système en utilisant un jeu d'instructions réduit. Ce microprocesseur gère l'ensemble du téléphone, par exemple l'affichage à l'écran, la gestion du clavier numérique, les différents menus de programmation, la connectique logicielle du circuit bande de base GSM (14) ;
- un module d'interface modem (20) est relié au module radio (12) par un bus de données (21), pour lui fournir des données à émettre selon un canal de donnée du réseau radio, et pour transmettre vers une unité d'entrée / sortie de données (modem et/ou micro-ordinateur), des données démodulées après réception sur un canal de données du réseau radio. Ce module d'interface modem (20) redirige les données via un connecteur série (25) par exemple de type RS232, vers un accessoire externe par exemple un modem externe (33) ou un ordinateur portable ;
- un moyen de commutation logiciel (27) permet l'aiguillage des données voix cryptées, soit vers le module radio pour effectuer un transfert vers le réseau cellulaire, soit vers le module interface modem pour effectuer un transfert vers, par exemple, le réseau RTC ;
- un moyen de commutation logiciel (24) permet l'aiguillage des données data provenant par exemple d'un ordinateur portable via un modem externe, soit vers le module radio pour transmettre de façon claire les données data vers le réseau GSM, soit vers le module de chiffrement / déchiffrement (28) qui va chiffrer les données data avant de les renvoyer vers le module radio (12).

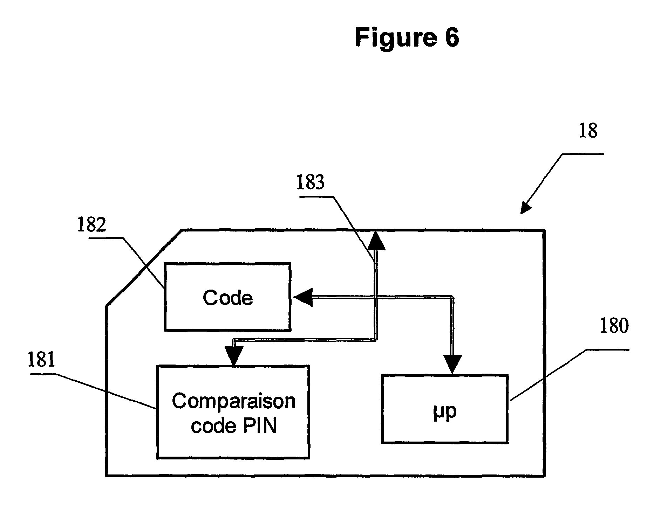

Le téléphone mobile comprend aussi :
- un module radio (12) modulant et démodulant les signaux d'informations vers une antenne (11), qui envoie ou reçoit des données de ou vers l'extérieur. (Le module radio 12 est en dehors du circuit bande de base 14 voir figure 2) ;
- un microphone (19) qui permet de retransmettre de manière analogique la voix ;
- un écouteur (13) qui convertit un signal analogique en un son ;
- un connecteur de carte SIM (non représenté) en contact avec une carte SIM (18) ;
- une carte SIM (18) qui comporte des éléments caractérisant la relation existant entre un opérateur de téléphonie mobile et un utilisateur du téléphone mobile. La figure 6 représente le diagramme synoptique de la carte Sim qui comprend un microprocesseur (180) une mémoire programme (181), une mémoire de données (182) reliées entre eux par l'intermédiaire d'un bus (183) ;
- une batterie (non représentée) rechargeable qui alimente le téléphone (10) et le module de chiffrement (28) ;
- un connecteur module de chiffrement (26) qui permet de transmettre les données en clair ou cryptées de ou vers le boîtier de chiffrement (28) via un lien DAI (Digital Audio Interface) (23) ;
- un connecteur série (25) filaire ou non filaire qui permet par exemple de recharger la batterie ou de transférer les informations entre le téléphone (10) et un modem externe (33). Ce connecteur comprend plusieurs entrées sorties dont deux (22) sont dédiées à la transmission des données entre un modem extérieur et l'interface modem, les autres sont reliées à l'écouteur, le microphone, et un dernier vers le module audio.

Le module de chiffrement (28) comprend :
- Un connecteur de module de chiffrement (31) qui permet de relier le module de chiffrement / déchiffrement au boîtier terminal (10) par un lien DAI (Digital Audio Interface) (23). Ce dernier comprend 4 fils pour la communication entre les deux boîtiers en émission réception vers le vocodeur (30) ou le circuit de chiffrement / déchiffrement (29). Ce connecteur (31) est en contact avec un connecteur identique (26) du boîtier terminal (10) ;
- un connecteur de lecteur de carte à puce (non représenté) qui comporte des palpeurs destinés à venir en contacte avec des métallisations de la puce d'une carte à puce (32) ;
- un circuit de chiffrement / déchiffrement des données (29) relié au connecteur précédemment cité ;
- un vocodeur bas débit (30) qui effectue une numérisation / dénumérisation des données, pour les adaptées au débit Data (9 600 bauds) quand les données doivent transiter par le réseau RTC, par exemple.

Une carte à puce (32) que l'on peut insérer dans la fente de lecture de carte à puce du module de chiffrement peut être une carte de chargement ou de sauvegarde de clés de chiffrements dans un chiffrement à clés secrètes. Dans le cas d'un chiffrement à clés publiques, la carte à puce est une enceinte sécurisée pour élaborer une clé de session fournie au module de chiffrement à chaque communication. Cette carte (32) évite de télécharger les éléments secrets d'un utilisateur dans le téléphone portable (10), ce qui le rend vulnérable. En effet, dès que les clés sont chargées, elles restent à l'intérieur.

Pour la mise en service du téléphone portable, l'utilisateur compose un numéro, dit code PIN, sur le clavier de son téléphone. Ce code est transmis à la carte SIM (18) grâce à un programme de mise en service du module audio. Une fois le code PIN transmit à la carte SIM, un programme est exécuté sous l'ordre du microprocesseur (180) de la carte SIM (18). Dans la mémoire programme (181), le code PIN est comparé à un code mémorisé dans une mémoire (182) de la carte SIM (18). Si la comparaison est positive, la mise en service du téléphone est autorisée et l'utilisateur peut sélectionner le mode de fonctionnement pour la communication.

En se référant aux techniques antérieures deux types de données à communiquer sont possibles : les données voix traitées par le module audio et les données data provenant d'un accessoire externe, par exemple d'un ordinateur portable utilisant le téléphone comme un transmetteur modem.

Trois manières de transférer les données voix sont possibles, grâce à l'invention : une conversation standard en clair par le biais du réseau de radiotéléphonie mobile, une conversation cryptée par le biais du réseau de radiotéléphonie mobile et une conversation cryptée (mode MODEM) par le biais d'une interface modem (20) pilotée par le téléphone portable (1) vers un réseau de communication filaire et/ou un réseau de communication par satellites. Les deux premiers modes de conversations sont déjà connus. Le troisième mode de conversation concerne l'invention.

Le transfert des données data, par exemple, d'un ordinateur portable peut se faire de deux façons possibles : un transfert en clair des données data via le réseau GSM et un transfert en crypté des données data via le réseau GSM. Le premier mode de transfert est déjà connu, le second concerne une particularité de l'invention.

L'utilisateur a au préalable sélectionné, grâce à des moyens interactifs de son téléphone GSM, le mode de fonctionnement pour les cinq possibles correspondances aux explications ci-après. Ces moyens interactifs sont par exemple un bouton haut-bas, qui une fois actionné par l'utilisateur, fait apparaître dans la rubrique souhaitée du menu d'utilisation du téléphone le choix : Appel voix GSM en clair, Appel voix GSM en crypté, Appel voix Modem en crypté, Appel data GSM en clair, Appel data GSM en crypté. L'utilisateur sélectionne le mode de fonctionnement de son choix en appuyant sur le bouton haut-bas pour amener un marqueur en vis à vis ou en coïncidence avec le choix, puis valide son choix par un bouton validation.

Lorsqu'un utilisateur veut téléphoner, il peut choisir l'une des trois communications, grâce au menu proposé sur son téléphone. Ce menu est géré par le microprocesseur par exemple de type ARM (17) du module Bande de Base 14). Lorsqu'un utilisateur répond à un appel, le mode de conversation n'est pas programmé via le menu, il est mis en place automatiquement. Le téléphone portable scrute l'émission de données provenant soit du réseau de radiotéléphonie cellulaire, soit d'un accessoire, par exemple le modem externe.

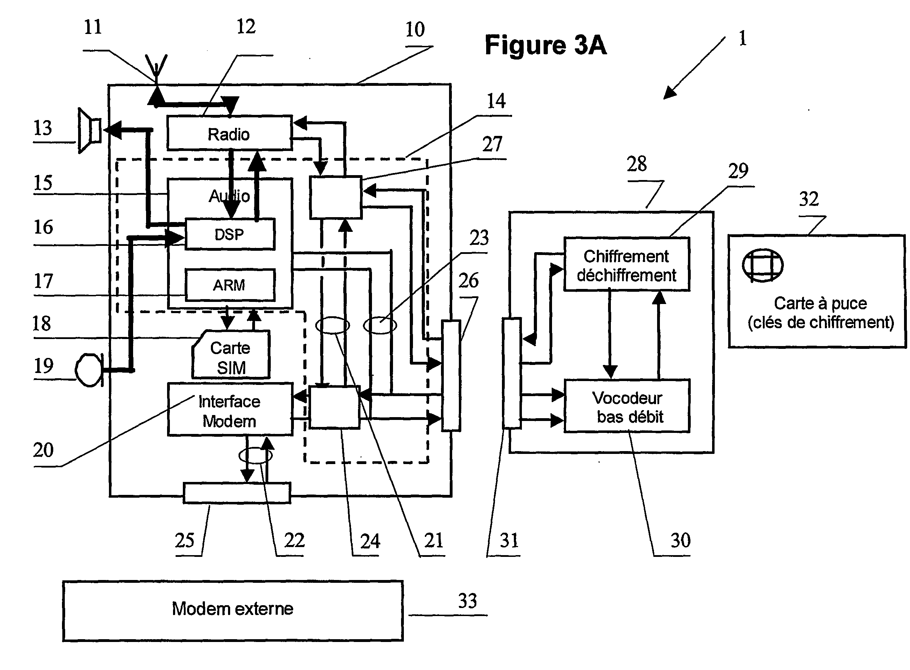

La figure 3A représente le trajet de la voix pendant une communication en clair à travers le réseau GSM. Lors d'une communication standard en clair, la voix provenant du microphone (19) est, en émission, numérisée par le microprocesseur DSP (16) du module audio (15) au débit usuel du réseau GSM (13 000 bauds). Le module radio (12) va moduler ce signal pour le transmettre vers l'extérieur à l'aide de l'antenne (11).

En réception, les données voix de l'extérieur arrivant à l'antenne (11) sont démodulées par le module radio (12), dénumérisées par le module audio (15), et envoyées vers l'écouteur (13).

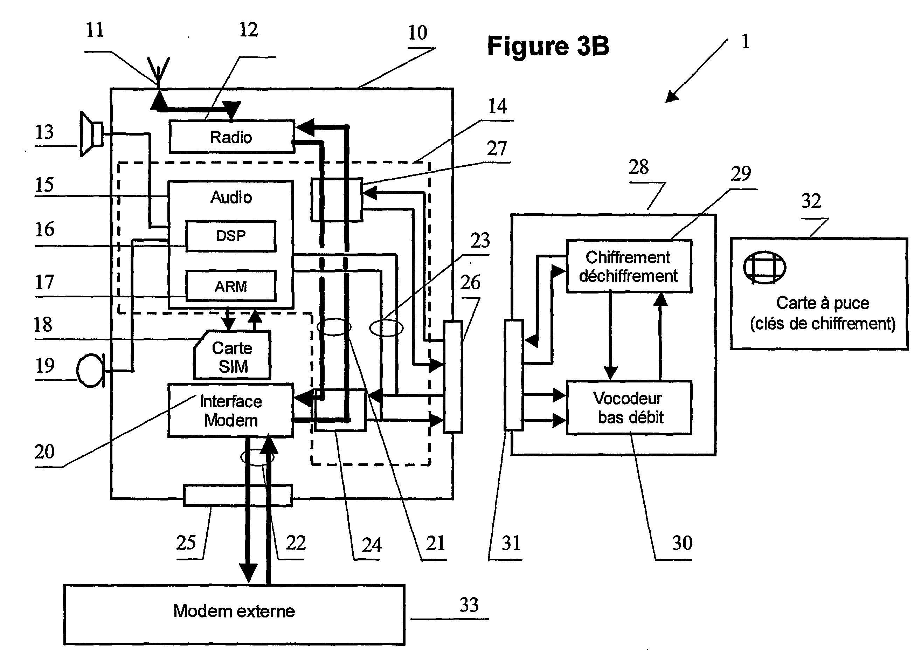

La figure 3B représente le trajet des données data en émission et réception standard en communication en clair. En émission les données data sont transférées du modem (33) vers le connecteur série (25), qui les redirige vers l'interface modem (20). Cette dernière envoie les données data au module radio (12) via le bus de donnée (21). L'aiguillage (24) s'enclenche afin que les données data soient redirigées vers le module radio (12). Celui-ci va moduler ce signal pour le transmettre vers l'extérieur via l'antenne (11). En réception le module radio (12) reçoit des données data via l'antenne (11). Il les démodule et les envoie vers l'interface modem via l'aiguillage (24). L'interface modem (20) redirige les données vers le modem externe (33) et un ordinateur portable, via le connecteur série.

Dans ce mode de communication, c'est le modem qui pilote le téléphone portable pour transmettre des données data vers le réseau GSM. Lors du transfert des données data du modem (33) vers l'interface modem (20), le modem (33) envoie des commandes AT du protocole Hayes avec les données.

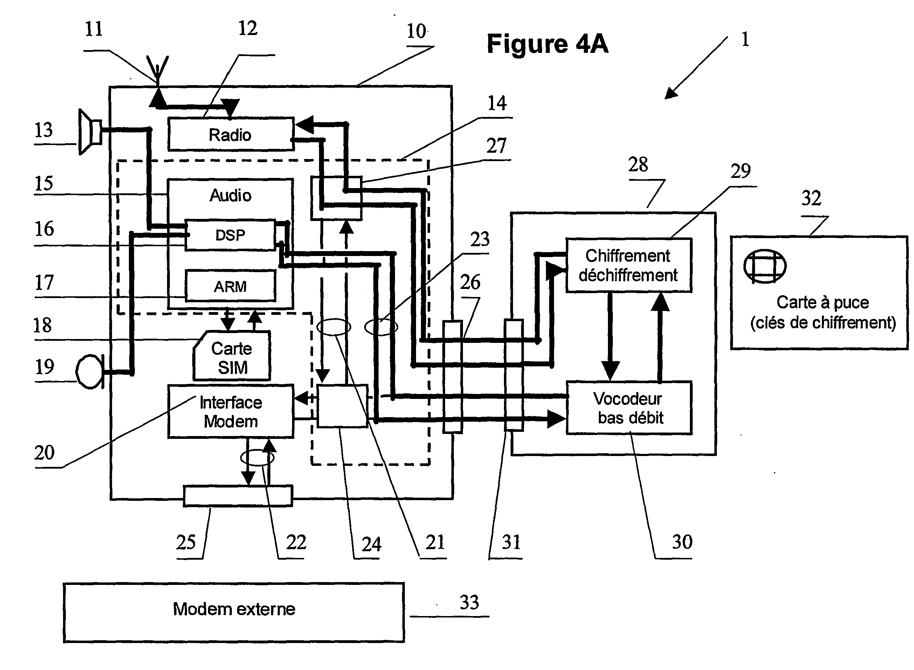

La figure 4A représente le trajet de la voix pendant une communication cryptée à travers le réseau GSM. Lors d'une conversation cryptée par le réseau GSM, la voix subit une première numérisation adaptée au débit type GSM par le microprocesseur DSP (16) du module audio (15). Les données voix numérisées sont envoyées vers le vocodeur (30) du module de chiffrement / déchiffrement (28) par un bus DAI (Digital Audio Interface) (23). Le vocodeur (30) dans ce cas effectue un deuxième traitement sur les données voix pour les adapter au débit mode DATA de 9 600 bauds, il envoie les données vers le circuit de chiffrement / déchiffrement (29) qui les chiffre. Les données voix cryptées au débit GSM sont ensuite envoyées au module radio (12) via le bus de donnée (21) « data bus », qui les transmet vers l'extérieur par l'antenne (11).

En réception des données voix cryptées arrivent à l'antenne (11). Le module radio (12) les transmet vers le module de cryptage (29), qui les déchiffre. Les données voix sont transmises par le vocodeur (30) au module audio (15) qui effectue une dénumérisation pour envoyer un signal analogique à l'écouteur (13).

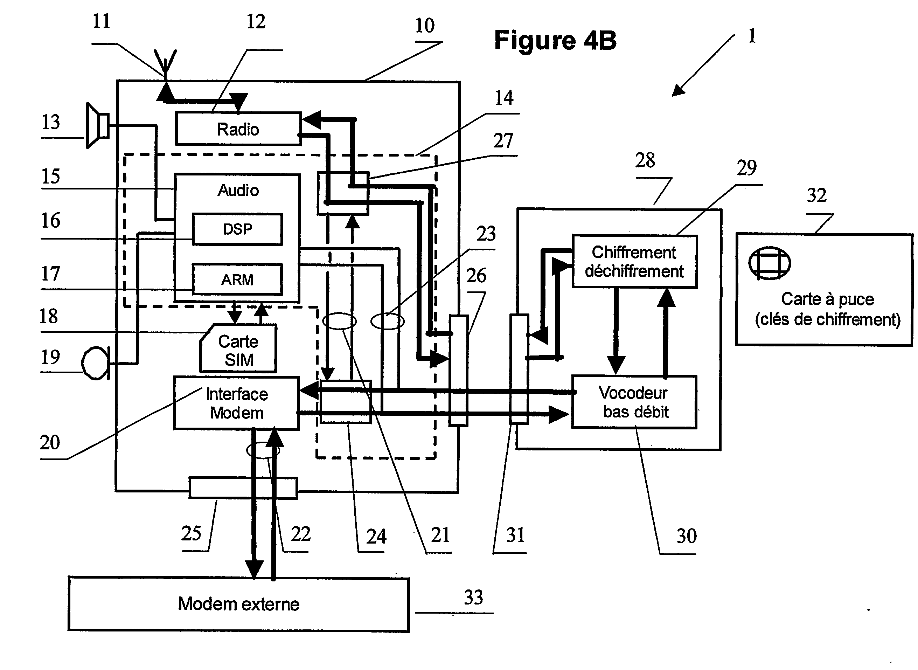

La figure 4B représente le trajet des données data cryptées en émission et réception à travers le réseau de téléphonie mobile. En émission les données data sont transférées du modem (33) vers le connecteur série (25), qui les redirige vers l'interface modem (20). Cette dernière envoie les données data au module de chiffrement / déchiffrement (28) via l'aiguillage (24). Les données data sont envoyées vers le vocodeur (30) du module de chiffrement / déchiffrement (28). Le vocodeur (30) dans ce cas n'effectue pas de numérisation des données adaptée au débit mode DATA de 9 600 bauds, il envoie simplement les données vers le circuit de chiffrement / déchiffrement (29) qui les chiffre. Les données data cryptées sont ensuite envoyées au module radio (12) via le bus de donnée (21) « data bus » et l'aiguillage (27), qui les transmet vers l'extérieur par l'antenne (11).

En réception, le module radio reçoit des données data via l'antenne (11). Il les démodule et les envoie vers le module de chiffrement via l'aiguillage (27) et le bus de donnée (21). Le circuit de chiffrement / déchiffrement (29) déchiffre les données data cryptées et les transmet vers le vocodeur (30). Celui-ci redirige les données vers l'interface modem (20) via le connecteur (31) et l'aiguillage (24). L'interface modem (20) redirige les données data vers le modem externe (33) et l'ordinateur portable, via le connecteur série (25).

Dans ce mode de communication, c'est le modem qui pilote le téléphone portable pour transmettre des données data vers le réseau GSM. Lors du transfert des données data du modem (33) vers l'interface modem (20), le modem (33) envoie des commandes AT du protocole Hayes avec les données.

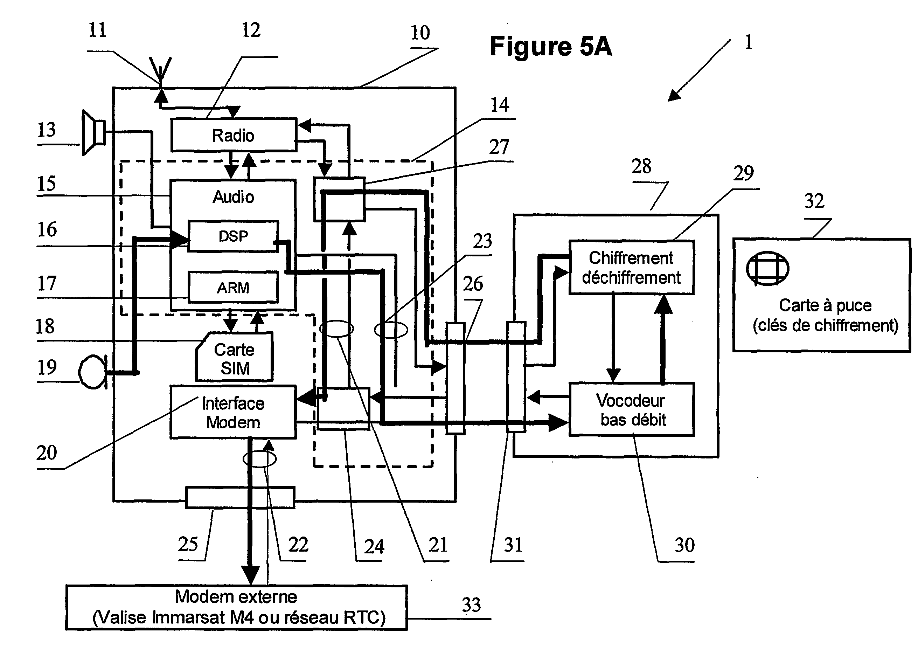

La figure 5A représente en émission le trajet de la voix pendant une communication cryptée à travers un réseau filaire et/ou satellites (en mode MODEM). Lors d'une conversation cryptée en mode MODEM, la voix subit une première numérisation adaptée au débit type GSM de 13 000 bauds par le processeur de signal numérique DSP (16) du module audio (15). Les données voix numérisées sont envoyées par un bus DAI (23) vers le vocodeur (30) du module de chiffrement / déchiffrement (28) contenu par exemple dans un boîtier capot. Le vocodeur (30) effectue une deuxième numérisation des données voix en adaptant leur débit au débit mode DATA par exemple de 9 600 bauds d'une interface modem et envoie ces données vers le circuit de chiffrement / déchiffrement (29) qui les chiffre. Les données voix cryptées sont ensuite redirigées vers le module interface Modem (20) via le bus de donnée « data bus » (21). L'aiguillage (27) des données voix sur le bus de donnée vers le module interface modem (20) ou vers le module radio (12) est géré par le microprocesseur de type ARM (17). Le module interface modem (20) permet d'envoyer des commandes AT du protocole Hayes et les données, au modem externe (33) via un connecteur série (25) par exemple de type RS232.

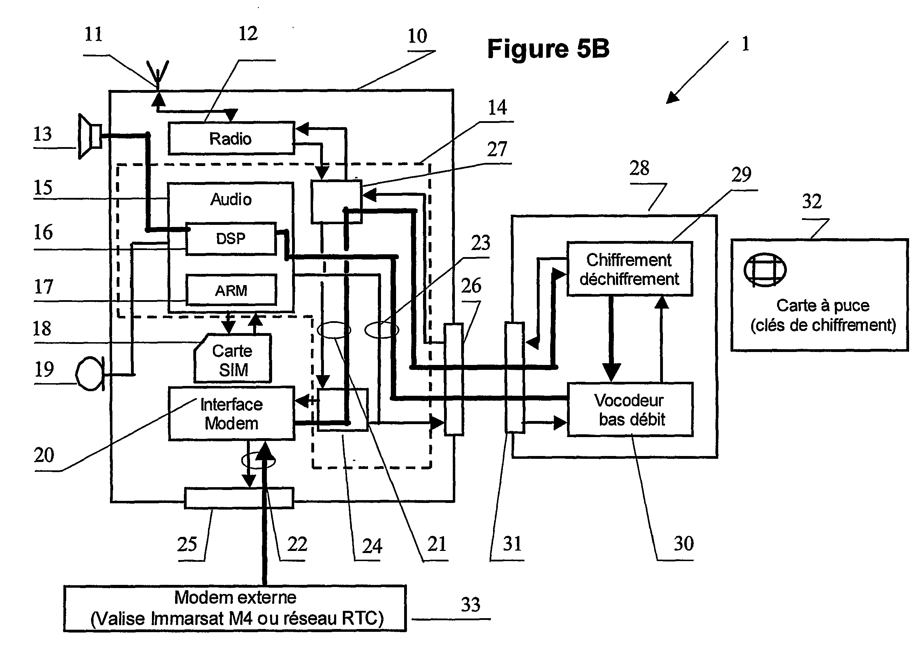

La figure 5B représente, en réception, des données voix cryptées provenant, par exemple, du réseau RTC qui sont envoyées du modem externe (33) vers le module interface modem (20) via le connecteur série (25). Ce module (20) les redirige vers le circuit de chiffrement / déchiffrement (29), qui les déchiffre. Les données sont transmises vers le vocodeur (30) pour une première dénumérisation, et sont envoyées au module audio (15) qui effectue une deuxième dénumérisation avant de les envoyer au haut-parleur (13).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de communication téléphonique comprenant un terminal de radiotéléphonie (1) du type incluant un module de radiocommunication (10) doté d'un circuit de modulation / démodulation radio (12) et un module de chiffrement / déchiffrement (28), le module de radiocommunication (10) comprenant un module d'interface modem (20) relié au module de radiocommunication (10) pour piloter un modem (33), le module de chiffrement / déchiffrement (28) comprenant un circuit de chiffrement / déchiffrement (29) et un circuit vocodeur (30) recevant des données voix à chiffrer ou à déchiffrer du module de radiocommunication (10), le chiffrement/déchiffrement des données data étant effectué directement dans le circuit de chiffrement / déchiffrement (29) du module de chiffrement déchiffrement (28), **caractérisé en ce que** le module de radiocommunication (10) comprend au moins une commande d'un menu affiché, sur un moyen d'affichage du terminal, permettant de choisir un mode de conversation, pour les données voix, et de transmission, pour les données data, crypté ou en clair, le système comportant :
- un modem externe (33) distinct du terminal de radiotéléphonie,
- des moyens (2, 25) de communication de données data reliés au module de radiocommunication (10) pour échanger des données data entre le terminal (1) et le modem externe (33), et
- un premier moyen de commutation logiciel (27) connecté au circuit de modulation / démodulation radio (12) pour aiguiller des données data reçues par le terminal (1) par l'intermédiaire du circuit de modulation / démodulation (12) radio vers le module interface modem (20) pour effectuer un transfert de données data à destination du modem externe (33), et inversement pour effectuer une émission de données data à partir du circuit de modulation / démodulation radio (12) par aiguillage des données data reçues par le terminal (1) par l'intermédiaire du module interface modem (20), un second moyen de commutation logiciel (24) étant prévu entre le module interface modem (20) et le premier moyen de commutation logiciel (27) ;
les données voix ou data étant aiguillées ou non, selon que le mode choisi est crypté ou en clair, vers ledit module de chiffrement / déchiffrement (28) par utilisation des moyens de commutation logiciels (24, 27).

2. Système de communication téléphonique selon la revendication 1, **caractérisé en ce que** ledit premier moyen de commutation logiciel (27) comprend un aiguillage (27) des données voix cryptées vers l'interface modem (20) ou vers un circuit de modulation / démodulation (12).

3. Système de communication téléphonique selon la revendication 1 ou 2, **caractérisé en ce que** le second moyen de commutation logiciel (24)comprend un aiguillage des données data du modem (33) vers le module de chiffrement / déchiffrement (28) ou vers le circuit de modulation/démodulation (12), l'aiguillage du second moyen de commutation logiciel étant du type commandé par logiciel et disposé entre ledit premier moyen de commutation logiciel (27) et l'interface modem (20).

4. Système de communication téléphonique selon une des revendications 1 à 3, **caractérisé en ce que** le module de chiffrement / déchiffrement (28) est inséré dans un boîtier capot relié au module terminal par un contacteur (31).

5. Système de communication téléphonique selon une des revendications 1 à 4, **caractérisé en ce que** le module de chiffrement / déchiffrement (28) comporte un lecteur de support de données pour l'échange uniquement de clés de session de chiffrement de l'utilisateur.

6. Système de communication téléphonique selon une des revendications 1 à 5, **caractérisé en ce que** le module de radiocommunication (10) comporte une connexion série (25) vers un modem externe (33).

7. Système de communication téléphonique selon la revendication 6, **caractérisé en ce que** la connexion série (25) est filaire de type RS232.

8. Système de communication téléphonique selon la revendication 6, **caractérisé en ce que** la connexion série (25) est non filaire.

9. Système de communication téléphonique selon la revendication 8, **caractérisé en ce que** la connexion série (25) non filaire est Infrarouge.

10. Système de communication téléphonique selon la revendication 8, **caractérisé en ce que** la connexion série (25) non filaire est radio 802.11 (WIFI).

11. Système de communication téléphonique selon la revendication 8, **caractérisé en ce que** la connexion série (24) non filaire est bluetooth.

12. Système de communication téléphonique selon une des revendications 1 à 11, **caractérisé en ce que** le mode de conversation sélectionné par le menu est une communication téléphonique en clair à travers le réseau de radiotéléphonie cellulaire, mettant en liaison directement un DSP (16) en émission ou en réception avec un circuit de modulation démodulation radio (12) du module de radiocommunication (10).

13. Système de communication téléphonique selon une des revendications 1 à 11, **caractérisé en ce que** le mode de conversation sélectionné par le menu est une communication téléphonique cryptée à travers le réseau de radiotéléphonie cellulaire, ce mode intercalant par la commutation de l'aiguillage (27) du premier moyen de commutation logiciel (27), entre un DSP (16) et un circuit de modulation / démodulation radio (12) du module de radiocommunication (10), le module de chiffrement / déchiffrement (28).

14. Système de communication téléphonique selon une des revendications 1 à 11, **caractérisé en ce que** le mode de conversation sélectionné par le menu est une communication téléphonique cryptée à travers le réseau de téléphonie commuté (4) ou un satellite (6) via un modem externe (33) commandé par le module de radiocommunication (10), ce mode intercalant, par la commutation de l'aiguillage (27) du premier moyen de commutation logiciel (27), entre le DSP (16) et le module de chiffrement / déchiffrement (28), un circuit vocodeur (30) adaptant les signaux numériques du DSP (16) à la vitesse de transmission d'un modem avant de les envoyer au circuit de chiffrement/déchiffrement (29) et déroutant les signaux provenant du modem externe (33) en sortant du circuit de chiffrement déchiffrement vers un haut-parleur (13) et ceux provenant d'un microphone (19) et sortant du circuit de chiffrement / déchiffrement (29) vers le modem externe (33).

15. Système de communication téléphonique selon la revendication 3 seule ou combinée à l'une des revendications 4 à 11, **caractérisé en ce que** le mode de transmission sélectionné par le menu est une transmission téléphonique en clair à travers le réseau de radiotéléphonie cellulaire mettant en liaison, par la commutation de l'aiguillage du second moyen de commutation logiciel (24), le module d'interface modem (20) avec un circuit de modulation démodulation radio (12).

16. Système de communication téléphonique selon la revendication 3 seule ou combinée à l'une des revendications 4 à 11, **caractérisé en ce que** le mode de transmission sélectionné par le menu est une transmission téléphonique cryptée à travers le réseau de radiotéléphonie cellulaire intercalant, par la commutation de l'aiguillage du second moyen de commutation logiciel (24), entre le module d'interface modem (20) et le circuit de modulation / démodulation radio (12), le module de chiffrement / déchiffrement (28).

17. Système de communication téléphonique selon une des revendications 1 à 3, comprenant un lecteur inclus dans le module de chiffrement / déchiffrement (28) pour recevoir un support à micro circuit de type carte à puce (32) amovible.

## Claims

1. Telephone communication system that includes a radiotelephone terminal (1) of the type that includes a radiocommunication module (10) equipped with a radio modulation/demodulation circuit (12) and an encryption/decryption module (28), the radiocommunication module (10) including a modem interface module (20) connected to the radiocommunication module (10) to control a modem (33), the encryption/decryption module (28) including an encryption/decryption circuit (29) and a vocoder circuit (30) receiving speech data to be encrypted or decrypted from the radiocommunication module (10), the encryption/decryption of the data being effected directly in the encryption/decryption circuit (29) of the encryption/decryption module (28), **characterised in that** the radiocommunication module (10) includes at least one control of a menu displayed on a display means of the terminal, allowing a conversation mode, for the speech data, and a transmission mode, for the encrypted or unencrypted data, to be chosen, the system including:
- an external modem (33) separate from the radiotelephone terminal,
- data communication means (2, 25) connected to the radiocommunication module (10) to exchange data between the terminal (1) and the external modem (33), and
- a first software switching means (27) connected to the radio modulation/demodulation circuit (12) to route data received by the terminal (1) by means of the radio modulation/demodulation circuit (12) to the modem interface module in order to effect a data transfer intended for the external modem (33), and conversely to effect a transmission of data from the radio modulation/demodulation circuit (12) by routing the data received by the terminal (1) by means of the modem interface module (20), a second software switching means (24) being provided between the modem interface module (20) and the first software switching means (27);
the speech data or data being routed or not, depending on whether the chosen mode is encrypted or unencrypted, to said encryption/decryption module (28) using software switching means (24, 27).

2. Telephone communication system according to claim 1, **characterised in that** the said first software switching means (27) includes a routing (27) of the encrypted speech data to the modem interface (20) or to a modulation/demodulation circuit (12).

3. Telephone communication system according to either claim 1 or claim 2, **characterised in that** the second software switching means (24) includes a routing of the data from the modem (33) to the encryption/decryption module (28) or to the modulation/demodulation circuit (12), the routing of the second software switching means being of the type controlled by software and placed between said first software switching means (27) and the modem interface (20).

4. Telephone communication system according to any one of claims 1 to 3, **characterised in that** the encryption/decryption module (28) is inserted in a unit cover linked to the terminal module by a contactor (31).

5. Telephone communication system according to any one of claims 1 to 4, **characterised in that** the encryption/decryption module (28) includes a data media reader for the exchange only of the user's encryption session keys.

6. Telephone communication system according to any one of claims 1 to 5, **characterised in that** the radiocommunication module (10) includes a serial connection (25) to an external modem (33).

7. Telephone communication system according to claim 6, **characterised in that** the serial connection (25) is of the RS232 wire type.

8. Telephone communication system according to claim 6, **characterised in that** the serial connection (25) is not of the wire type.

9. Telephone communication system according to claim 8, **characterised in that** the serial connection (25), not of the wire type, is infrared.

10. Telephone communication system according to claim 8, **characterised in that** the serial connection (25), not of the wire type, is 802.11 radio (WIFI).

11. Telephone communication system according to claim 8, **characterised in that** the serial connection (24), not of the wire type, is bluetooth.

12. Telephone communication system according to any one of claims 1 to 11, **characterised in that** the conversation mode selected by the menu is an unencrypted telephone call through the cellular radiotelephone network, directly connecting a DSP (16) on send or receive with a radio modulation/demodulation circuit (12) of the radiocommunication module (10).

13. Telephone communication system according to any one of claims 1 to 11, **characterised in that** the conversation mode selected by the menu is an encrypted telephone call through the cellular radiotelephone network, this mode inserting the encryption/decryption module (28) by switching the routing unit (27) of the first software switching means (27) between a DSP (16) and a radio modulation/demodulation circuit (12) of the radiocommunication module (10).

14. Telephone communication system according to any one of claims 1 to 11, **characterised in that** the conversation mode selected by the menu is an encrypted telephone call through the switched telephone network (4) or a satellite (6) via an external modem (33) controlled by the radiocommunication module (10), this mode inserting, by switching the routing unit (27) of the first software switching means (27), between the DSP (16) and the encryption/decryption module (28), a vocoder circuit (30) that adapts the digital signals of the DSP (16) to the transmission speed of a modem before sending them to the encryption/decryption circuit (29) and diverting the signals coming from the external modem (33) exiting from the encryption/decryption circuit to a loudspeaker (13) and those coming from a microphone (19) and exiting from the encryption/decryption circuit (29) to the external modem (33).

15. Telephone communication system according to claim 3, in isolation or in combination with any one of claims 4 to 11, **characterised in that** the mode of transmission selected by the menu is an unencrypted telephone transmission through the cellular radiotelephone network connecting the modem interface module (20) with a radio modulation/demodulation circuit (12) by switching the routing unit of the second software switching means (24).

16. Telephone communication system according to claim 3, in isolation or in combination with any one of claims 4 to 11, **characterised in that** the mode of transmission selected by the menu is an encrypted telephone transmission through the cellular radiotelephone network, inserting the encryption/decryption module (28) between the modem interface module (20) and the radio modulation/demodulation circuit (12), by switching the routing unit of the second software switching means (24).

17. Telephone communication system according to any one of claims 1 to 3, comprising a reader included in the encryption/decryption module (28) to receive a microcircuit medium of the removable chip card (32) type.

## Patentansprüche

1. Fernsprechsystem, umfassend ein Funkterminal (1) vom Typ mit Funkverkehrsmodul (10), welches ausgestattet ist mit einem Radiomodulations-/Demodulationskreis (12) und einem Chiffrier-/Dechiffriermodul (28), wobei das Funkverkehrsmodul (10) umfasst ein Schnittstellenmodul Modem (20), das mit dem Funkverkehrsmodul (10) verbunden ist, um ein Modem (33) anzusteuern, wobei das Chiffrier-/Dechiffriermodul (28) einen Chiffrier-/Dechiffrierkreis (29) und ein Sprachverschlüsselungsgerät (30) beinhaltet, das die zu chiffrierenden / dechiffrierenden Stimmdaten des Funkverkehrsmoduls (10) aufnimmt, wobei die Chiffrierung / Dechiffrierung der Daten direkt im Chiffrier-/Dechiffrierkreis (29) des Chiffrier-/Dechiffriermoduls (28) erfolgt, **dadurch gekennzeichnet, dass** das Funkverkehrsmodul (10) mindestens eine auf einem Anzeigemittel des Terminals angezeigte Menüsteuerung aufweist, welche die Wahl eines Konversationsmodus, für die Stimmdaten, und eines Übertragungsmodus, für verschlüsselte oder unverschlüsselte Daten, erlaubt, wobei das System umfasst:
- ein vom Fernsprechterminal getrenntes externes Modem (33),
- mit dem Funkverkehrsmodul (10) verbundene Mittel zur Datenkommunikation (2, 25), um zwischen dem Terminal (1) und dem externen Modem (33) Daten auszutauschen, und
- ein mit dem Radiomodulations/Demodulationskreis (12) verbundenes erstes Mittel zur softwareseitigen Umschaltung (27), um die durch das Terminal (1) erhaltenen Daten für den Datentransfer zum externen Modem (33) mittels Radiomodulations-/Demodulationskreis (12) zum Modem des Schnittstellenmoduls (20) zu leiten, und umgekehrt, um eine Datenübertragung vom Radiomodulations-/Demodulationskreis (12) aus der Leitung der durch das Terminal (1) erhaltenen Daten durch das Modem des Schnittstellenmoduls (20) zu bewerkstelligen, wobei dabei ein zweites Mittel zur softwareseitigen Umschaltung (24) zwischen dem Modem des Schnittstellenmoduls (20) und dem ersten Mittel zur softwareseitigen Umschaltung (27) vorgesehen ist;
die Stimmdaten oder Daten, entsprechend dem gewählten Modus chiffriert oder nicht chiffriert, werden durch Verwendung der Mittel zur softwareseitigen Umschaltung (24, 27) zu besagtem Chiffrier-/Dechiffriermoduls (28), geleitet oder nicht.

2. Fernsprechsystem nach Anspruch 1, **dadurch gekennzeichnet, dass** besagtes erstes Mittel zur softwareseitigen Umschaltung (27) eine Leitung (27) der verschlüsselten Stimmdaten zum Schnittstellenmodem (20) oder zum Modulations- / Demodulationskreis (12) umfasst.

3. Fernsprechsystem nach Anspruch 1 oder 2, **dadurch gekennzeichnet, dass** das zweite Mittel zur softwareseitigen Umschaltung (24) eine Leitung der Daten des Modems (33) zum Chiffrier-/Dechiffriermodul (28) oder zum Modulations- / Demodulationskreis (12) umfasst, wobei dabei die Leitung des zweiten Mittels zur softwareseitigen Umschaltung vom Typ Softwaresteuerung zwischen besagtem ersten Mittel zur softwareseitigen Umschaltung (27) und dem Schnittstellenmodem (20) angeordnet ist.

4. Fernsprechsystem nach Anspruch 1 bis 3, **dadurch gekennzeichnet, dass** das Chiffrier-/Dechiffriermodul (28) in ein mit dem Terminalmodul durch einen Geber (31) verbundenes Gehäuse eingeschoben ist.

5. Fernsprechsystem nach Anspruch 1 bis 4, **dadurch gekennzeichnet, dass** der Chiffrier-/Dechiffriermodul (28) ein Support-Lesegerät für den Austausch allein von Sitzungs-Chiffrierschlüsseln des Anwenders umfasst.

6. Fernsprechsystem nach Anspruch 1 bis 5, **dadurch gekennzeichnet, dass** das Funkverkehrsmodul (10) eine serielle Verbindung (25) zu einem externen Modem (33) umfasst.

7. Fernsprechsystem nach Anspruch 6, **dadurch gekennzeichnet, dass** die serielle Verbindung (25) in Kabelform als Typ RS232 ausgeführt ist.

8. Fernsprechsystem nach Anspruch 6, **dadurch gekennzeichnet, dass** die serielle Verbindung (25) kabellos ist.

9. Fernsprechsystem nach Anspruch 8, **dadurch gekennzeichnet, dass** die kabellose serielle Verbindung (25) infrarot ist.

10. Fernsprechsystem nach Anspruch 8, **dadurch gekennzeichnet, dass** die kabellose serielle Verbindung (25) eine Radioverbindung 802.11 (WIFI) ist.

11. Fernsprechsystem nach Anspruch 8, **dadurch gekennzeichnet, dass** die kabellose serielle Verbindung (25) eine Bluetooth-Verbindung ist.

12. Fernsprechsystem nach Anspruch 1 bis 11, **dadurch gekennzeichnet, dass** der über das Menu gewählte Konversationsmodus eine unverschlüsselte Fernsprechkommunikation durch das Mobilfunknetz ist, die beim Senden und Empfangen mittels Modulations- / Demodulationskreis (12) des Funkverkehrsmoduls (10) direkt ein DSP (16) in Verbindung bringt.

13. Fernsprechsystem nach Anspruch 1 bis 11, **dadurch gekennzeichnet, dass** der über das Menu gewählte Konversationsmodus eine verschlüsselte Fernsprechkommunikation durch das schnurlose Fernsprechnetz ist, wobei dieser Modus zwischen einem DSP (16) und einem Radio-Modulations- / Demodulationskreis (12) des Funkverkehrsmoduls (10) durch die Leitungsumschaltung (27) des ersten Mittels zur softwareseitigen Umschaltung (27) das Chiffrier-/Dechiffriermodul (28) einschaltet.

14. Fernsprechsystem nach Anspruch 1 bis 11, **dadurch gekennzeichnet, dass** der über das Menü gewählte Konversationsmodus eine verschlüsselte Fernsprechkommunikation durch das Schalttelefonnetz (4) oder einen Satelliten (6) über ein durch das Funkverkehrsmodul (10) angesteuertes externes Modem (33) ist, wobei dieser Modus durch die Leitungsumschaltung (27) des ersten Mittels zur softwareseitigen Umschaltung (27) zwischen dem DSP (16) und dem Chiffrier-/Dechiffriermodul (28) eingeschaltet wird, wobei ein Sprachverschlüsselungsgerät (30) die numerischen Signale des DSP (16) an die Übertragungsgeschwindigkeit eines Modems vor ihrer Versendung an den Chiffrier-/Dechiffrierkreis (29) anpasst und die aus dem Chiffrier-/Dechiffrierkreis tretenden Signale des externen Modems (33) zu einem Lautsprecher (13) und leitet die aus dem Chiffrier-/Dechiffrierkreis (29) tretenden von einem Mikrophon (19) kommenden Signale zum externen Modem (33) leitet.

15. Fernsprechsystem nach Anspruch 3, allein oder in Kombination mit einem der Ansprüche 4 bis 11, **dadurch gekennzeichnet, dass** der durch das Menü gewählte Übertragungsmodus eine unverschlüsselte Fernübertragung durch das Mobilfunknetz ist, die das Modul des Schnittstellenmodems (20) über die Leitungsumschaltung des zweiten Mittels zur softwareseitigen Umschaltung (24) mit einem Radiomodulations-/Demodulationskreis (12) verbindet.

16. Fernsprechsystem nach Anspruch 3, allein oder in Kombination mit einem der Ansprüche 4 bis 11, **dadurch gekennzeichnet, dass** der durch das Menu gewählte Übertragungsmodus eine verschlüsselte Fernübertragung durch das Mobilfunknetz ist, wobei der Chiffrier-/Dechiffriermodul (28) durch Leitungsumschaltung des zweiten Mittels zur softwareseitigen Umschaltung (24) zwischen Schnittstellenmodems (20) und Radiomodulations-/Demodulationskreis (12) eingeschaltet wird.

17. Fernsprechsystem nach Anspruch 1 bis 3, umfassend ein im Chiffrier-/Dechiffriermodul (28) beinhaltetes Lesegerät, um eine Mikroschaltkreisunterstützung vom Typ einsteckbarer Mikrochip zu erhalten.
